(19) **Europäisches Patentamt European Patent Office Office européen des brevets**

(11) **EP 2 472 941 B1**

(12) **EUROPEAN PATENT SPECIFICATION**

(45) Date of publication and mention of the grant of the patent:
**12.03.2014 Bulletin 2014/11**

(51) Int Cl.:
***H04W 24/02*** *(2009.01)* ***H04Q 3/00*** *(2006.01)*

(21) Application number: **10813279.6**

(22) Date of filing: **26.05.2010**

(86) International application number:
**PCT/CN2010/073271**

(87) International publication number:
**WO 2011/026357 (10.03.2011 Gazette 2011/10)**

(54) **SERVICE DEACTIVATION METHOD AND DEVICE THEREOF**

DIENSTDEAKTIVIERUNGSVERFAHREN UND VORRICHTUNG DAFÜR

PROCÉDÉ DE DÉSACTIVATION DE SERVICE ET DISPOSITIF CORRESPONDANT

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **07.09.2009 CN 200910161961**

(43) Date of publication of application:
**04.07.2012 Bulletin 2012/27**

(73) Proprietor: **ZTE Corporation Guangdong Province 518057 (CN)**

(72) Inventors:
• **LIU, Xinyu**
  **Shenzhen**
  **Guangdong 518057 (CN)**
• **YAN, Jie**
  **Shenzhen**
  **Guangdong 518057 (CN)**
• **SHU, Chang**
  **Shenzhen**
  **Guangdong 518057 (CN)**
• **HE, Meng**
  **Shenzhen**
  **Guangdong 518057 (CN)**

(74) Representative: **Zerbi, Guido Maria et al Murgitroyd & Company Piazza Borromeo, 12 20123 Milano (IT)**

(56) References cited:
**CN-A- 1 761 273      CN-A- 1 761 273
CN-A- 101 022 569      CN-A- 101 646 192
US-A1- 2003 046 443      US-A1- 2003 046 443**

EP 2 472 941 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to the field of mobile communication technique, and more especially, to a service deactivation method and device thereof.

Such a method and device are e.g. disclosed in CN 1 761 273 A.

Background of the Related Art

With the development of mobile communication system and the daily increasing traffic volume of intelligent mobile communication network, the usage amount of intelligent service by terminal users is also becoming more and more, which will make the number of the online calls in the entire intelligent mobile communication system maintain at a relatively high level. Meanwhile, with the continuous improvement of the communication technique, services which can be provided by the intelligent mobile communication network become more and more and the functions become more and more powerful, which needs to extend and upgrade the services of intelligent mobile communication network frequently. In addition, the operators also need to implement projects more frequently such as service upgrade and version replacement and so on, in order to provide better services for the terminal users. Generally, the upgrade operations of the services are arranged in the morning, because the number of the service online calls is usually relatively small at that time, but as the services become increasingly rich and people using the services are growing daily, the number of the service online calls will still maintain at a relatively high level within the time period of the service upgrade. However, it must perform a service deactivation operation on the specified service so as to satisfy the demand of the service upgrade.

The traditional method for service deactivation has two modes, comprising a mandatory service deactivation mode and a non-mandatory service deactivation mode. The mandatory service deactivation mode refers that the Service Control Point (SCP) obtains a service deactivation command and then interrupts all current online calls of the specified service instantly; and the non-mandatory service deactivation mode refers that the SCP obtains a service deactivation command and then doesn't allow the access of new calls anymore and waits for all current online calls of the specified service to terminate voluntarily.

When the number of the service online calls is relatively low, the traditional method for service deactivation can also be applicable. When the number of the service online calls is relatively high, the traditional method for service deactivation has serious defects:

    1. if a non-mandatory service deactivation mode is adopted, the waiting time of all current online calls of the services terminating voluntarily may be very long as the number of the service online calls is relatively large, which will occupy the quite precious time of the service upgrade excessively and may cause that the upgrade operation can't be completed on time, and the risk is very high.

    2. if a mandatory service deactivation mode is adopted, the mandatory service deactivation mode will increase the system load instantly as the number of the service online calls is relatively large, and influence the system stability severely, and even may cause the system failure and the system crash, and directly cause a service upgrade failure, and the influence is very serious.

As can be seen from the above, when the number of the online calls of specified service is very large, either a mandatory service deactivation mode or a non-mandatory service deactivation mode will have a corresponding problem and then make the service upgrade operation within the intelligent mobile communication network can't be completed or lead to a system crash.

Summary of the Invention

The example of the present invention provides a method and device for service deactivation, which are used to solve the problem that the service deactivation operation can't be completed stably when the number of the service online calls of the specified service tends to be larger in the related art.

The example of the present invention provides a method for service deactivation, which comprises: after receiving a deactivation instruction used for requesting deactivating a specified service, determining a service deactivation rate value of the specified service, wherein said service deactivation rate value is the number of interrupted online calls per unit time; and carrying out an interrupt processing respectively for online calls of the specified service according to the determined service deactivation rate value.

Before the step of said determining the service deactivation rate value of the specified service, the method further comprises:

determining the number of the online calls of the specified service; and

judging the determined number of the online calls is greater than a preset protection threshold of the number of the online calls.

After the step of said determining the number of the online calls of the specified service, the method further comprises: when judging the determined number of the online calls is not greater than the preset protection threshold of the number of the online calls,
carrying out the interrupt processing respectively for the online calls of the specified service according to a mandatory service deactivation mode or non-mandatory service deactivation mode.
The step of determining the service deactivation rate value of the specified service comprises:

determining a difference of a maximum number of call attempts per second and a sum of the call attempts per second of other services besides the specified service according to the number of call attempts per second possessed respectively by each service which is processed by a service control point device; and

taking a product result of the determined difference and a weight as the determined service deactivation rate value of the specified service.

Determining said weight according to current CPU utilization rate of the service control point device and current message backlog number in a message queue.
The example of the present invention provides a device for service deactivation, comprising: a service deactivation rate value determination unit, which is configured to determine a service deactivation rate value of specified service after receiving a deactivation instruction used for requesting deactivating the specified service, wherein said service deactivation rate value is the number of interrupted online calls per unit time; and a first service deactivation execution unit, which is configured to carry out an interrupt processing respectively for online calls of the specified service according to the service deactivation rate value determined by the service deactivation rate value determination unit.
Said service deactivation rate value determination unit comprises:

an instruction receiving subunit, which is configured to: receive a deactivation instruction for requesting deactivating the specified service;

a service online call statistical subunit, which is configured to: determine the number of the online calls of the specified service after the instruction receiving subunit receives a deactivation instruction for requesting deactivating the specified service;

a judging subunit, which is configured to: judge whether the number of the online calls determined by the service online call statistical subunit is greater than a preset protection threshold of the number of the online calls; and

a service deactivation rate value determination subunit, which is configured to: determine the service deactivation rate value of the specified service when a judging result of the judging subunit is yes, said service deactivation rate value is the number of interrupted online calls per unit time.

Said device further comprises a second service deactivation execution unit, and said second service deactivation execution unit is configured to: carry out the interrupt processing respectively for the online calls of the specified service according to a mandatory service deactivation mode or non-mandatory service deactivation mode when the judging result of the judging subunit is no.
[0016] Said service deactivation rate value determination subunit comprises:

a first determination module, which is configured to: determine a difference of a maximum number of the call attempts per second and a sum of the call attempts per second of other services besides the specified service according to the number of the call attempts per second possessed respectively by each service which is processed by a service control point device;

a second determination module, which is configured to: take a product result of the difference determined by the first determination module and one weight as the service deactivation rate value of the specified service.

Said second determination module is configured to: determine said weight according to current CPU utilization rate of the service control point device and current message backlog number in a message queue.

The example of the present invention provides a method for service deactivation, which comprises: after receiving a deactivation instruction used for requesting deactivating a specified service, determining a service deactivation rate value of the specified service, wherein said service deactivation rate value is the number of interrupted online calls per unit time; and outputting the determined service deactivation rate value to users; and carrying out an interrupt processing respectively for online calls of the specified service according to a revised service deactivation rate value inputted by the users based on the outputted service deactivation rate value.

After the step of determining the service deactivation rate value of the specified service, the method further comprises:

determining the number of the online calls of the specified service;

judging the determined number of the online calls is greater than a preset protection threshold of the number of the online calls and implementing the step of outputting the determined service deactivation rate value to the users; and

when judging the determined number of the online calls is not greater than the preset protection threshold of the number of the online calls, carrying out the interrupt processing respectively for the online calls of the specified service according to a mandatory service deactivation mode or non-mandatory service deactivation mode.

The step of determining a service deactivation rate value of the specified service comprises:

determining a difference of a maximum number of call attempts per second and a sum of the call attempts per second of other services besides the specified service according to the number of the call attempts per second possessed respectively by each service which is processed by a service control point device; and

taking a product result of the determined difference and one weight as the determined service deactivation rate value of the specified service;

wherein, said weight is determined according to a current CPU utilization rate of the service control point device and a current message backlog number in a message queue.

The example of the present invention provides a device for service deactivation, comprising: a service deactivation rate value determination unit, which is configured to: determine a service deactivation rate value of a specified service after receiving a deactivation instruction used for requesting deactivating the specified service, wherein said service deactivation rate value is the number of interrupted online calls per unit time; a human-computer interaction unit, which is configured to: output the service deactivation rate value determined by the service deactivation rate value determination unit to users; a service deactivation execution unit, which is configured to: carry out the interrupt processing respectively for the online calls of the specified service according to s revised service deactivation rate value inputted by the users based on the service deactivation rate value outputted by the human-computer interaction unit.

Said service deactivation rate value determination unit comprises:

an instruction receiving subunit, which is configured to: receive a deactivation instruction for requesting deactivating the specified service;

a service online call statistical subunit, which is configured to: determine the number of the online calls of the specified service after the instruction receiving subunit receives a deactivation instruction used for requesting deactivating the specified service;

a judging subunit, which is configured to: judge whether the number of the online calls determined by the service online call statistical subunit is greater than a preset protection threshold of the number of the online calls; and

a service deactivation rate value determination subunit, which is configured to: determine the service deactivation rate value of the specified service when a judging result of the judging subunit is yes, said service deactivation rate value is the number of interrupted online calls per unit time.

Said service deactivation rate value determination subunit comprises:

a first determination module, which is configured to: determine a difference of a maximum number of call attempts per second and a sum of the call attempts per second of other services besides the specified service according to the number of the call attempts per second possessed respectively by each service which is processed by a service control point device;

a second determination module, which is configured to: take a product result of the difference determined by the first determination module and one weight as the service deactivation rate value of the specified service;

wherein, said weight is determined according to a current CPU utilization rate of the service control point device and a current message backlog number in a message queue.

The service deactivation scheme provided in the example of the present invention implements that the service deactivation operation can be completed linearly and smoothly at a certain rate when the number of the online calls of the service are very large. During the service upgrade, it can effectively avoid the system failure caused by the sharp increase of the system load in the deactivation process, thereby greatly increasing the success rate of the service upgrade and reducing the influences of the service upgrade on the stability and safety of system.

Brief Description of Drawings

FIG. 1 is a processing flow chart of method for service deactivation disclosed by the example 1 of the present invention;

FIG. 2 is a processing flow chart of improvement method for service deactivation disclosed by the example 2 of the present invention;

FIG. 3 is a schematic diagram of the processing process for screening calls required to be interrupted in the example of the present invention;

FIG. 4 is a structural diagram of device for service deactivation disclosed by the example 1 of the present invention;

FIG. 5 is a structural chart of improved device for service deactivation disclosed by the example 2 of the present invention.

Preferred Embodiments of the Present Invention

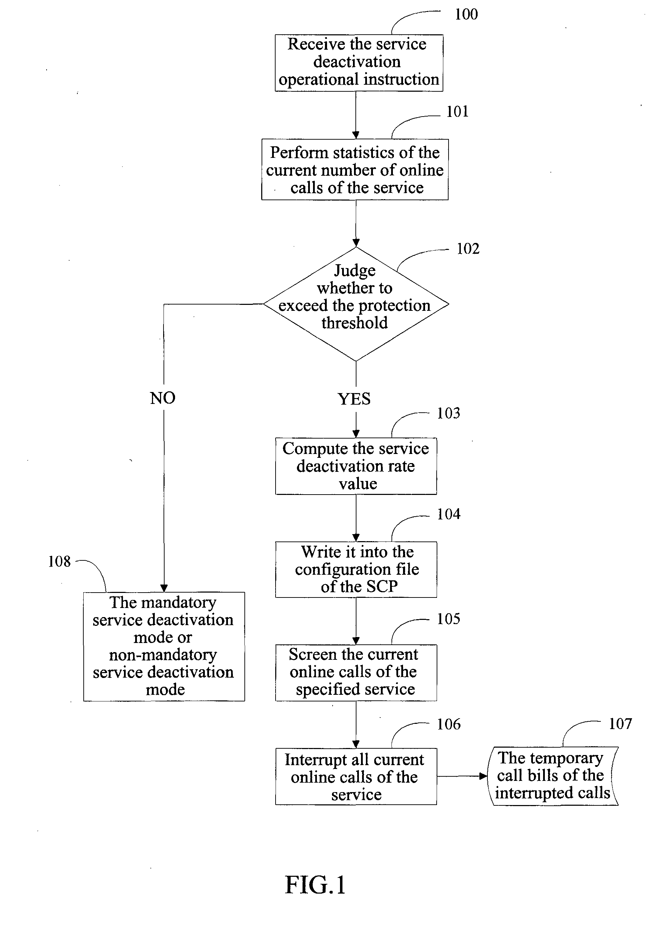

The processing flow of the method for service deactivation provided by the example 1 of the present invention is shown in FIG. 1, and the specific implementation step thereof comprises:

when a certain service in the intelligent mobile communication network needs to be upgraded, the step 100 is executed at first and a service deactivation command is sent by the user for implementing the deactivation for the specified service, and the step 101 is executed after the SCP receives the service deactivation command, and the statistics of current number of the online calls of the service is performed, and then the current number of online calls of the service can be stored in the SCP.

The statistics of the current number of the online calls of the specified service is obtained through taking a statistic average value of all the numbers of online calls of the service by utilizing a time span prior to the current moment of the system. Here, the time span can be a randomly set value, for example, it is determined by the actual work environment and obtained by summarizing multiple practical experiences, a time span of ten minutes is a relatively reasonable choice;
after obtaining the current number of online calls of the specified service, the step 102 is executed, and judge whether the current number of online calls of the specified service exceeds the protection threshold of the number of the online calls (the setting of the protection threshold of the online calls is mainly based on the maximum call attempts per second (caps) in the current system and is generally not higher than the maximum caps) set by system, if the current number of the online calls of the service is lower than the protection threshold of the number of the online calls, it indicates that the service is currently running in a relatively lower load state, and the step 108 can be executed, and the method for service deactivation (i.e. the mandatory service deactivation mode or non-mandatory service deactivation mode introduced in the above background of the related art ) in the existing technology is adopted to carry out a service deactivation operation.

Contrarily, if the current number of online calls of the service exceeds the protection threshold of the number of online calls, it indicates that the service is currently in a running state with a relatively higher load, and it proceeds to the step 103 at the moment and the service deactivation rate value is computed. Here, the service deactivation rate value is the current number of the interrupted service calls per second in the implementation of service deactivation operation. The service deactivation rate value can be equal to the difference of the maximum caps which is supported by system and the sum of the current caps of other services of system and can be obtained through computation of the following formula:

$$V1 = C_{max}\text{-}C_{others}$$

Wherein, V1 is the maximum value of the service deactivation rate;
$C_{max}$ refers to the maximum number of caps in each service included in the system;
$C_{others}$ refers to the sum of the current number of caps of other services.

The maximum service deactivation rate value which is calculated out here can be used, and in order to further protect the system effectively, the service deactivation rate value needs to multiply one weight R related to the current CPU utilization rate of the SCP device and the current message backlog number in the message queue on the basis of the maximum value of the service deactivation rate, thus the formula for computing a service deactivation rate value will become:

$$V= R{\times}V1= R{\times}(C_{max}\text{-}C_{others})$$

Wherein, the weight R can be determined through the corresponding relationship listed in the following weight configuration Table 1:

Table 1

| MSG\CPU | 0-20% | 20%-40% | 40%-60% | 60%-80% | 80%-100% |
|---|---|---|---|---|---|
| 0-100 | 0.95 | 0.90 | 0.85 | 0.80 | 0.75 |
| 100-200 | 0.90 | 0.90 | 0.85 | 0.80 | 0.75 |
| 200-300 | 0.85 | 0.85 | 0.85 | 0.80 | 0.75 |
| 300-400 | 0.80 | 0.80 | 0.80 | 0.80 | 0.75 |
| 400-$\infty$ | 0.75 | 0.75 | 0.75 | 0.75 | 0.75 |

Wherein MSG represents the current message backlog number in the message queue and CPU represents the current CPU utilization rate of the SCP device, for example, when MSG is determined to be 0-100 and CPU is determined to be 0-20%, the weight R is equal to 0.95 which can be obtained through searching Table 1. The current message backlog number in the message queue and the current CPU utilization rate can be obtained through reading the database table of the SCP.

In addition to the above given computing mode for acquiring a service deactivation rate value, there are other variants of computing modes for acquiring a deactivation rate value, and these variant modes also fall into the protection scope of the present invention.

After obtaining the service deactivation rate value, the step 104 can be executed, and the service deactivation rate value is stored in the configuration file of the SCP, and the configuration file will automatically take effect after being updated.

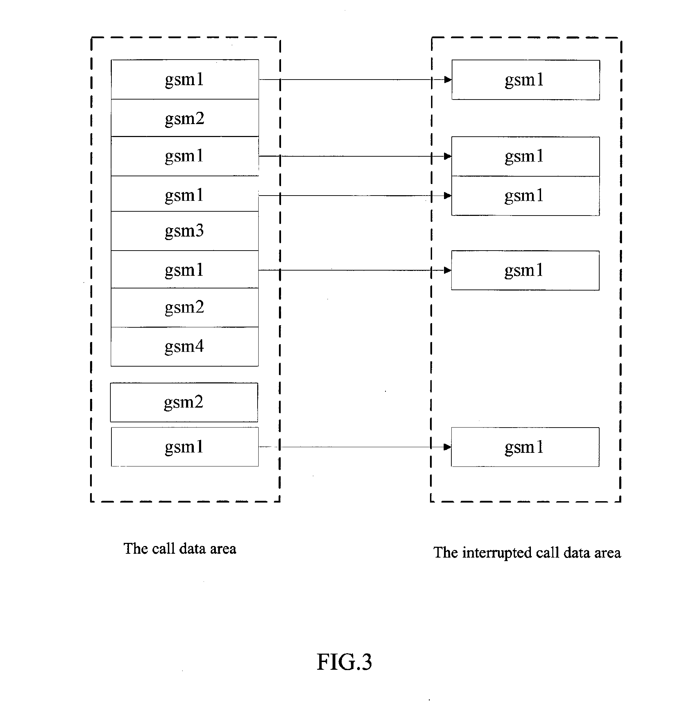

The step 105 is executed, and all current online calls of the specified service which needs to be deactivated are obtained through utilizing a service key to perform screening on the current service in the system. As shown in FIG. 3, many services such as gsm1, gsm2, gsm3 and so on coexist in the current system, the service herein which needs to be deactivated is only gsm1, and the service key stored inside the SCP for distinguishing different services is utilized to screen out the current online calls of gsm 1 service.

The step 106 is executed, and the deactivation processing is carried out for all current online calls in services which have been screened out according to the service deactivation rate value stored in the configuration file of SCP, thereby implementing that the current online calls of all services which have been screened out within a limited time span are terminated successively and completing a smooth deactivation processing for the service.

The above method for service deactivation is adopted to carry out the deactivation processing on all current online calls in services which need to be deactivated, and each online call may also be terminated mandatorily so that a normal call ending bill can't be generated, and therefore the step 107 needs to be executed, which stores temporary call bills for each interrupted online call respectively.

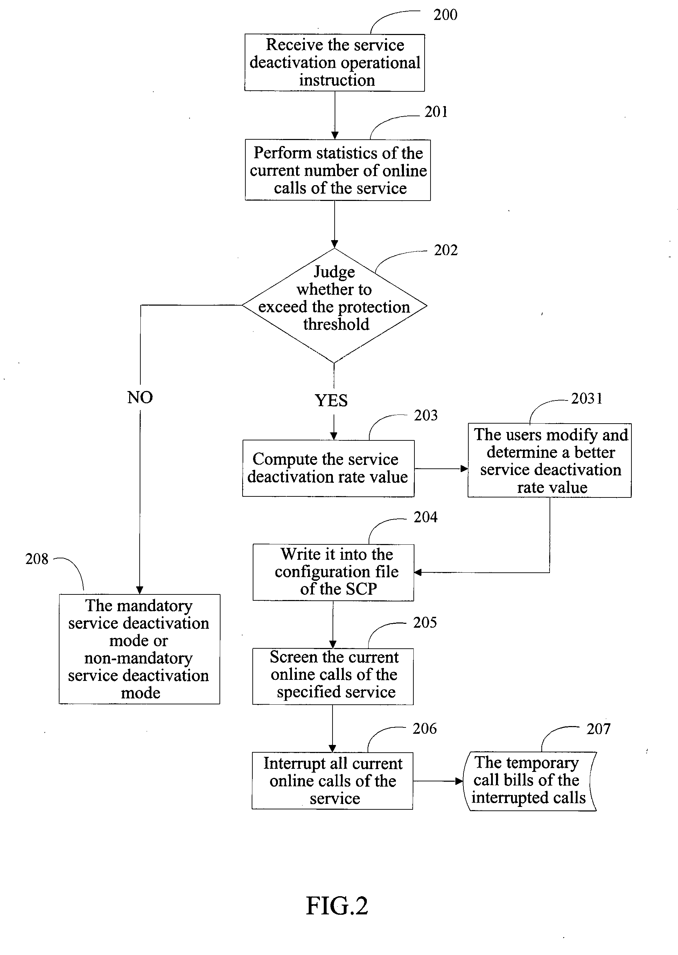

The example 2 of the present invention provides an improvement scheme with respect to the example 1, and the processing flow is shown in FIG. 2, wherein, the steps 200~208 are the same as steps 100~108 in the example 1, and its improvements lie in that the step 2031 of the human-computer interaction is added, which adopts an artificial participation way to determine a better service deactivation rate value.

The specific workflow is that: after computing and obtaining the service deactivation rate value in the step 203, execute the step 2031 and take the service deactivation rate value as a recommended value and transmit the recommended value to Service Management Access Point (SMAP) terminal through Service Management Point (SMP), the SMAP terminal displaying the recommended value to the users, and the users are able to adjust the service deactivation rate value appropriately according to other relevant factors (a plurality of factors such as whether there is an influence of historical issues, the habits of the users, the equipment transformation, aging, the performance degradation and so on), that is, obtain the revised service deactivation rate value through the SMAP terminal revising the service deactivation rate value, and then transmit the revised service deactivation rate value to SCP through SMP. And then execute the following step 204 and so on, thereby completing the service deactivation operation.

One example of one practical application of the service deactivation method provided in the example 2 of the present invention is that:

It is assumed that SCP needs to perform a service upgrade operation on a certain intelligent service, and the current number of online calls of the service is 5000 and the maximum call capacity of system is about 2000 caps and the sum of caps of other services is 1200 caps, the protection threshold of number of online calls is set to be 1500 in order to protect the system, the current CPU utilization rate of SCP is 35% at the moment and the message backlog number in the message queue is 250. To perform a deactivation operation on the service, the SCP obtains a service deactivation operation command and then invokes a service online call statistical module and makes the statistics to obtain that the current number of online calls of the service is 5000, and through a comparison with the protection threshold of the number of the online calls, which is 1500, it determines that the current number of the online calls exceeds the protection threshold of the number of the online calls, which is 1500, and also determines that a smooth service deactivation method needs to be used to carry out the service deactivation. At this time, the control parameter computation module reads the current CPU utilization rate and the message backlog number in the message queue which are preset in the database table.

According to the read current CPU utilization rate and the message backlog number in the message queue, it can obtain that the weight R is 0.85 at the moment through searching the above preset Table 1. Computing the service deactivation rate value V is specifically:

$$V = R \times (C - C1) = 0.85 \times (2000 - 1200) = 680$$

The service deactivation rate value is computed and obtained to be 680 per second in such way, the users can choose to revise the obtained 680 per second to be 500 per second according to the actual situation and transmit the result to the SCP synchronously, and then write the revised service deactivation rate value 500 per second into the configuration file and update the revised service deactivation rate value to make it effective. To continue the implementation of the service deactivation operation, the SCP will terminate all current online calls of the service at a speed of 500 per second, and meanwhile the SCP performs screening on the call data area according to a service key and interrupts the current online calls of the service, and then after 10 seconds, the SCP will terminate 5000 current online calls of the service and generate a temporary call bill which is caused by the service interruption with respect to each deactivated online call, the deactivation service ends at the moment and then the users can perform the upgrade operation of the service.

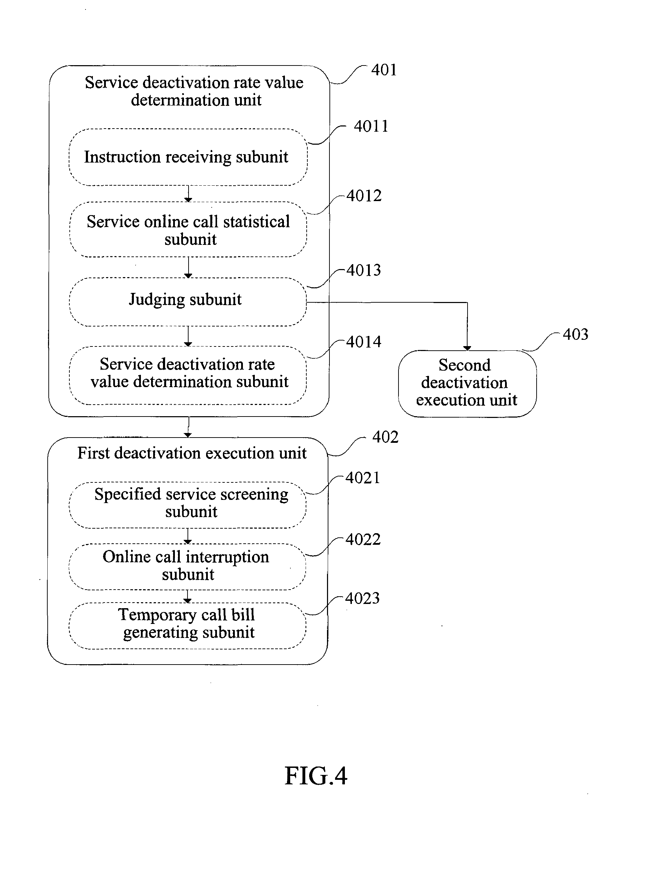

The example 3 of the present invention provides a device for service deactivation, and as shown in FIG. 4, the device can be installed in the service control point (SCP) and also can be placed outside the SCP certainly, and these variant modes all fall into the protection scope of the claims of the present invention, and the device can specifically comprise:

a service deactivation rate value determination unit 401, which is configured to determine the service deactivation rate value of the specified service; and the service deactivation rate value determination unit 401 can comprise the following parts specifically:

an instruction receiving subunit 4011, which is configured to receive a service deactivation instruction of the specified service which is sent by the user;

a service online call statistical subunit 4012, which is configured to determine the number of all current online calls of the specified service in the SCP after the instruction receiving subunit 4011 receives the service deactivation instruction of the specified service which is sent by the user;

a judging subunit 4013, which is configured to judge whether the number of the online calls of the specified service obtained by the service online call statistical subunit 4012 is larger than the preset protection threshold of the number of the online calls, and the preset protection threshold can generally be stored in the SCP;

a service deactivation rate value determination subunit 4014, which is configured to determine the service deactivation rate value of the specified service when a judging result of the judging subunit 4013 is yes, wherein the service deactivation rate value is the number of the interrupted online calls per unit time, which can be specifically obtained through determining a difference of the maximum number of the call attempts per second and the sum of the numbers of other call attempts per second according to the number of the call attempts per second possessed respectively by each service which is processed by SCP, furthermore, in order to further protect the system effectively, the difference can be multiplied by one weight related to the current CPU utilization rate of SCP and the current message backlog number in the message queue on the basis of the determined difference;

a first deactivation execution unit 402, which is configured to carry out the interrupt processing respectively on the online calls of the specified service according to the service deactivation rate value determined by the service deactivation rate value determination subunit 4014.

a second deactivation execution unit 403, which is configured to carry out the interrupt processing respectively on the online calls of the specified service according to the existing mandatory service deactivation mode or non-mandatory service deactivation mode when the judging result of the judging subunit 4013 is no.

[0045]  The service deactivation rate value determination subunit 4014 comprises:

a first determination module, which is configured to: determine a difference of the maximum number of the call attempts per second and the sum of the numbers of other call attempts per second according to the number of the call attempts per second possessed respectively by each service which is processed by the service control point device; and

a second determination module, which is configured to: take the product result of the difference determined by the first determination module and one weight as the service deactivation rate value of the specified service.

Wherein, said second determination module is configured to: determine said weight according to the current CPU utilization rate of the service control point device and the current message backlog number in the message queue.
Wherein, the internal part of the above first deactivation execution unit 402 can comprise the following three parts specifically:

a specified service screening subunit 4021, which is configured to screen out all current online calls of the specified service from the SCP according to a service key;

an online call interruption subunit 4022, which is configured to carry out interrupt processing mandatorily on all the current online calls of the specified service which have been screened out by the specified service screening subunit 4021;

a temporary call bill generating subunit 4023, which is configured to generate a corresponding temporary call bill when the online call interruption subunit 4022 interrupts the current online calls and causes that a normal call bill can't be generated.

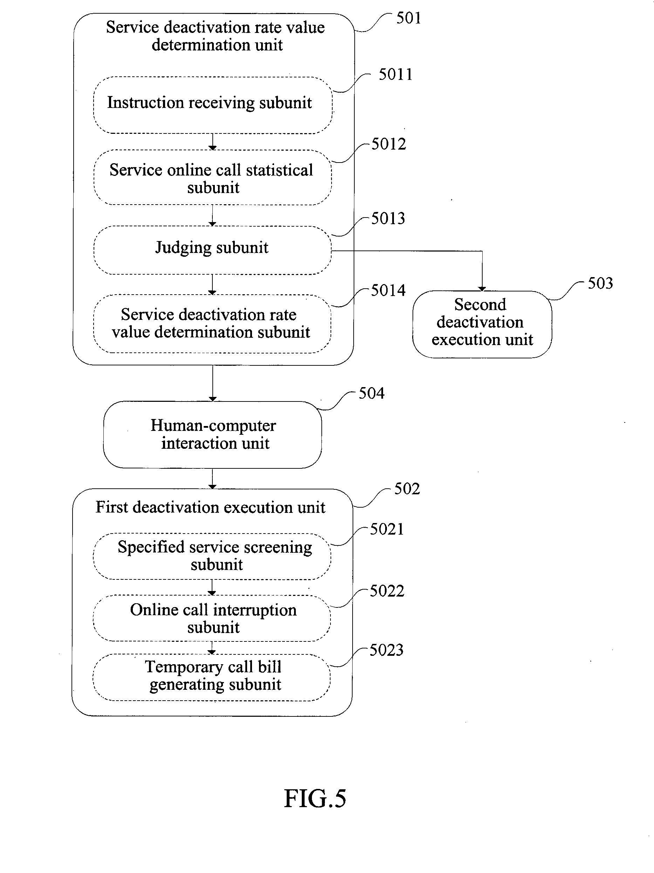

The example 4 of the present invention provides an improved device for service deactivation, and as shown in FIG. 5, its improvements with respect to the example 3 lie in that a human-computer interaction unit 504 is added before the first deactivation execution unit. Other units shown in FIG. 5 are the same as units in FIG. 4 correspondingly.

The specific workflow of the improved service deactivation device is that, after the service deactivation rate value determination subunit 5014 determines the service deactivation rate value of the specified service, the human-computer interaction unit 504 is utilized for taking the service deactivation rate value as a recommended value and transmitting the recommended value to the terminal of the Service Management Access Point (SMAP) through the Service Management Point (SMP) and also displaying the recommended value to users, and users adjust the service deactivation rate value appropriately according to external factors and obtains a revised service deactivation rate value, and the SMP transmits the revised service deactivation rate value to the configuration file in the SCP, and the first deactivation execution unit 502 executes a service deactivation operation according to the revised service deactivation rate value.

Apparently, those skilled in the art can make various modifications and variations for the present invention without departing from the spirit and scope of the present invention. Therefore, if these modifications and variations of the present invention belong to the scope of the claims of the invention and the equivalent techniques thereof, the present invention also intends to include these modifications and variations.

Industrial Applicability

The present invention implements that the service deactivation operation can be completed linearly and smoothly at a certain rate when the number of the online calls of the service is very large. During the service upgrade, it can effectively avoid the system failure caused by sharp increase of system load in the deactivation process, thereby greatly increasing the success rate of service upgrade and reducing the influences of service upgrade on the stability and safety of system.

**Claims**

1. A method for service deactivation, the method comprising:

   after receiving a deactivation instruction used for requesting deactivating a specified service (100), determining a service deactivation rate value of the specified service (103), wherein said service deactivation rate value is the number of interrupted online calls per unit time; and
   carrying out an interrupt processing respectively for online calls of the specified service according to the determined service deactivation rate value (106).

2. The method according to claim 1, wherein, before the step of determining the service deactivation rate value of the specified service, the method further comprises:

   determining the number of the online calls of the specified service; and
   judging the determined number of the online calls is greater than a preset protection threshold of the number of the online calls.

3. The method according to claim 2, wherein, after the step of determining the number of the online calls of the specified service, the method further comprises: when judging the determined number of the online calls is not greater than the preset protection threshold of the number of the online calls,
   carrying out the interrupt processing respectively for the online calls of the specified service according to a mandatory service deactivation mode or a non-mandatory service deactivation mode.

4. The method according to claim 1, wherein, the step of determining the service deactivation rate value of the specified service comprises:

   determining a difference of a maximum number of call attempts per second and a sum of the numbers of the call attempts per second of other services besides the specified service according to the number of the call attempts per second possessed respectively by each service which is processed by a service control point device; and
   taking a product result of the determined difference and one weight as the determined service deactivation rate value of the specified service.

5. The method according to claim 4, wherein, determine said weight according to a current CPU utilization rate of the service control point device and a current message backlog number in a message queue.

6. A device for service deactivation, the device comprising:

   a service deactivation rate value determination unit, which is configured to: determine a service deactivation rate value of a specified service after receiving a deactivation instruction used for requesting deactivating the specified service, wherein said service deactivation rate value is the number of interrupted online calls per unit time; and
   a first service deactivation execution unit, which is configured to: carry out an interrupt processing respectively for online calls of the specified service according to the service deactivation rate value determined by the service deactivation rate value determination unit.

7. The device according to claim 6, wherein, said service deactivation rate value determination unit comprises:

   an instruction receiving subunit, which is configured to: receive a deactivation instruction for requesting deactivating the specified service;
   a service online call statistical subunit, which is configured to: determine the number of the online calls of the specified service after the instruction receiving subunit receives the deactivation instruction for requesting deactivating the specified service;
   a judging subunit, which is configured to: judge whether the number of the online calls determined by the service online call statistical subunit is greater than a preset protection threshold of the number of the online calls; and
   a service deactivation rate value determination subunit, which is configured to: determine the service deactivation rate value of the specified service when a judging result of the judging subunit is yes, wherein said service deactivation rate value is the number of interrupted online calls per unit time.

8. The device according to claim 7, wherein, said device further comprises a second service deactivation execution unit, and said second service deactivation execution unit is configured to: carry out the interrupt processing respectively for the online calls of the specified service according to a mandatory service deactivation mode or non-mandatory service deactivation mode when the judging result of the judging subunit is no.

9. The device according to claim 7, wherein, said service deactivation rate value determination subunit comprises:

   a first determination module, which is configured to: determine a difference of a maximum number of call attempts per second and a sum of the numbers of the call attempts per second of other services besides the specified service according to the number of the call attempts per second possessed respectively by each service which is processed by a service control point device;
   a second determination module, which is configured to: take a product result of the difference determined by the first determination module and one weight as the service deactivation rate value of the specified service.

10. The device according to claim 9, wherein, said second determination module is configured to: determine said weight according to a current CPU utilization rate of the service control point device and a current message backlog number in a message queue.

11. A method for service deactivation, the method comprising:

    after receiving a deactivation instruction used for requesting deactivating a specified service (200), determining a service deactivation rate value of the specified service (203), wherein said service deactivation rate value is the number of interrupted online calls per unit time;
    outputting the determined service deactivation rate value to users; and
    carrying out an interrupt processing respectively for online calls of the specified service according to a revised service deactivation rate value inputted by the users based on the outputted service deactivation rate value (206).

12. The method according to claim 11, wherein, after the step of determining the service deactivation rate value of the specified service, the method further comprises:

    determining the number of the online calls of the specified service;
    judging the determined number of the online calls is greater than a preset protection threshold of the number of the online calls, and implementing the step of outputting the determined service deactivation rate value to the users; and
    when judging the determined number of the online calls is not greater than the preset protection threshold of the number of the online calls, carrying out the interrupt processing respectively for the online calls of the specified service according to a mandatory service deactivation mode or non-mandatory service deactivation mode.

13. The method according to claim 11, wherein, the step of determining the service deactivation rate value of the specified service comprises:

   determining a difference of a maximum number of call attempts per second and a sum of the numbers of the call attempts per second of other services besides the specified service according to the number of the call attempts per second possessed respectively by each service which is processed by a service control point device; and
   taking a product result of the determined difference and one weight as the determined service deactivation rate value of the specified service;
   wherein, said weight is determined according to a current CPU utilization rate of a service control point device and a current message backlog number in a message queue.

14. A device for service deactivation, the device comprising:

   a service deactivation rate value determination unit, which is configured to: determine a service deactivation rate value of a specified service after receiving a deactivation instruction used for requesting deactivating the specified service, wherein said service deactivation rate value is the number of interrupted online calls per unit time;
   a human-computer interaction unit, which is configured to: output the service deactivation rate value determined by the service deactivation rate value determination unit to users; and
   a service deactivation execution unit, which is configured to: carry out an interrupt processing respectively for online calls of the specified service according to a revised service deactivation rate value inputted by the users based on the service deactivation rate value outputted by the human-computer interaction unit.

15. The device according to claim 14, wherein, said service deactivation rate value determination unit comprises:

   an instruction receiving subunit, which is configured to: receive a deactivation instruction for requesting deactivating the specified service;
   a service online call statistical subunit, which is configured to: determine the number of the online calls of the specified service after the instruction receiving subunit receives the deactivation instruction used for requesting deactivating the specified service;
   a judging subunit, which is configured to: judge whether the number of the online calls determined by the service online call statistical subunit is greater than a preset protection threshold of the number of the online calls; and
   a service deactivation rate value determination subunit, which is configured to: determine the service deactivation rate value of the specified service when a judging result of the judging subunit is yes, wherein said service deactivation rate value is the number of interrupted online calls per unit time.

16. The device according to claim 15, wherein, said service deactivation rate value determination subunit comprises:

   a first determination module, which is configured to: determine a difference of a maximum number of call attempts per second and a sum of the numbers of the call attempts per second of other services besides the specified service according to the number of the call attempts per second possessed respectively by each service which is processed by a service control point device;
   a second determination module, which is configured to: take a product result of the difference determined by the first determination module and one weight as the service deactivation rate value of the specified service;
   wherein, said weight is determined according to a current CPU utilization rate of the service control point device and a current message backlog number in a message queue.

**Patentansprüche**

1. Ein Verfahren zur Dienstdeaktivierung, wobei das Verfahren Folgendes beinhaltet:

   nach dem Empfangen einer Deaktivierungsanweisung, die zum Anfordern des Deaktivierens eines spezifizierten Diensts (100) verwendet wird, Bestimmen einer Dienstdeaktivierungskennzahl des spezifizierten Diensts (103), wobei die Dienstdeaktivierungskennzahl die Anzahl an unterbrochenen Online-Rufen pro Zeiteinheit ist; und jeweils Ausführen einer Unterbrechungsverarbeitung für Online-Rufe des spezifizierten Diensts gemäß der bestimmten Dienstdeaktivierungskennzahl (106).

2. Verfahren gemäß Anspruch 1, wobei vor dem Schritt des Bestimmens der Dienstdeaktivierungskennzahl des spezifizierten Diensts das Verfahren ferner Folgendes beinhaltet:

Bestimmen der Anzahl der Online-Rufe des spezifizierten Diensts; und
Beurteilen, ob die bestimmte Anzahl der Online-Rufe größer als eine voreingestellte Schutzschwelle der Anzahl der Online-Rufe ist.

3. Verfahren gemäß Anspruch 2, wobei nach dem Schritt des Bestimmens der Anzahl der Online-Rufe des spezifizierten Diensts das Verfahren ferner Folgendes beinhaltet:

wenn beurteilt wird, dass die bestimmte Anzahl der Online-Rufe nicht größer als die voreingestellte Schutzschwelle der Anzahl der Online-Rufe ist,
jeweils Ausführen der Unterbrechungsverarbeitung für die Online-Rufe des spezifizierten Diensts gemäß einem obligatorischen Dienstdeaktivierungsmodus oder einem nicht obligatorischen Dienstdeaktivierungsmodus.

4. Verfahren gemäß Anspruch 1, wobei der Schritt des Bestimmens der Dienstdeaktivierungskennzahl des spezifizierten Diensts Folgendes beinhaltet:

Bestimmen einer Differenz einer maximalen Anzahl an Abrufversuchen pro Sekunde und einer Summe der Anzahl der Abrufversuche pro Sekunde von anderen Diensten neben dem spezifizierten Dienst gemäß der Anzahl der Abrufversuche pro Sekunde, die jeder Dienst, der durch eine Dienststeuerungsknotenvorrichtung verarbeitet wird, jeweils innehat; und
Nehmen eines Produktergebnisses der bestimmten Differenz und eines Gewichts als die bestimmte Dienstdeaktivierungskennzahl des spezifizierten Diensts.

5. Verfahren gemäß Anspruch 4, wobei das Gewicht gemäß einer aktuellen CPU-Auslastungsrate der Dienststeuerungsknotenvorrichtung und einer aktuellen Nachrichtenrückstandsanzahl in einer Nachrichtenwarteschlange bestimmt wird.

6. Eine Vorrichtung zur Dienstdeaktivierung, wobei die Vorrichtung Folgendes beinhaltet:

eine Dienstdeaktivierungskennzahlbestimmungseinheit, die zu Folgendem konfiguriert ist: Bestimmen einer Dienstdeaktivierungskennzahl eines spezifizierten Diensts nach dem Empfangen einer Deaktivierungsanweisung, die zum Anfordern des Deaktivierens des spezifizierten Diensts verwendet wird, wobei die Dienstdeaktivierungskennzahl die Anzahl an unterbrochenen Online-Rufen pro Zeiteinheit ist; und
eine erste Dienstdeaktivierungsausführungseinheit, die zu Folgendem konfiguriert ist:

jeweils Ausführen einer Unterbrechungsverarbeitung für Online-Rufe des spezifizierten Diensts gemäß der bestimmten Dienstdeaktivierungskennzahl, bestimmt durch die Dienstdeaktivierungskennzahlbestimmungseinheit.

7. Vorrichtung gemäß Anspruch 6, wobei die Dienstdeaktivierungskennzahlbestimmungseinheit Folgendes beinhaltet:

eine Anweisung empfangende Untereinheit, die zu Folgendem konfiguriert ist: Empfangen einer Deaktivierungsanweisung zum Anfordern des Deaktivierens des spezifizierten Diensts;
eine statistische Dienst-Online-Ruf-Untereinheit, die zu Folgendem konfiguriert ist:

Bestimmen der Anzahl der Online-Rufe des spezifizierten Diensts, nachdem die Anweisung empfangende Untereinheit die Deaktivierungsanweisung zum Anfordern des Deaktivierens des spezifizierten Diensts empfangen hat;
eine Beurteilungsuntereinheit, die zu Folgendem konfiguriert ist: Beurteilen, ob die Anzahl der durch die statistische Dienst-Online-Ruf-Untereinheit bestimmten Online-Rufe größer als eine voreingestellte Schutzschwelle der Anzahl der Online-Rufe ist; und

eine Dienstdeaktivierungskennzahlbestimmungsuntereinheit, die zu Folgendem konfiguriert ist: Bestimmen der Dienstdeaktivierungskennzahl des spezifizierten Diensts, wenn ein Beurteilungsergebnis der Beurteilungsuntereinheit ja ist, wobei die Dienstdeaktivierungskennzahl die Anzahl an unterbrochenen Online-Rufen pro Zeiteinheit ist.

8. Vorrichtung gemäß Anspruch 7, wobei die Vorrichtung ferner eine zweite Dienstdeaktivierungsausführungseinheit beinhaltet und die zweite Dienstdeaktivierungsausführungseinheit zu Folgendem konfiguriert ist: jeweils Ausführen der Unterbrechungsverarbeitung für die Online-Rufe des spezifizierten Diensts gemäß einem obligatorischen Dienstdeaktivierungsmodus oder einem nicht obligatorischen Dienstdeaktivierungsmodus, wenn das Beurteilungsergebnis der Beurteilungsuntereinheit nein ist.

9. Vorrichtung gemäß Anspruch 7, wobei die Dienstdeaktivierungskennzahlbestimmungsuntereinheit Folgendes beinhaltet:

ein erstes Bestimmungsmodul, das zu Folgendem konfiguriert ist: Bestimmen einer Differenz einer maximalen Anzahl an Abrufversuchen pro Sekunde und einer Summe der Anzahl der Abrufversuche pro Sekunde von anderen Diensten neben dem spezifizierten Dienst gemäß der Anzahl der Abrufversuche pro Sekunde, die jeder Dienst, der durch eine Dienststeuerungsknotenvorrichtung verarbeitet wird, jeweils innehat;

ein zweites Bestimmungsmodul, das zu Folgendem konfiguriert ist: Nehmen eines Produktergebnisses der durch das erste Bestimmungsmodul bestimmten Differenz und eines Gewichts als die Dienstdeaktivierungskennzahl des spezifizierten Diensts.

10. Vorrichtung gemäß Anspruch 9, wobei das zweite Bestimmungsmodul zu Folgendem konfiguriert ist: Bestimmen des Gewichts gemäß einer aktuellen CPU-Auslastungsrate der Dienststeuerungsknotenvorrichtung und einer aktuellen Nachrichtenrückstandsanzahl in einer Nachrichtenwarteschlange.

11. Ein Verfahren zur Dienstdeaktivierung, wobei das Verfahren Folgendes beinhaltet:

nach dem Empfangen einer Deaktivierungsanweisung, die zum Anfordern des Deaktivierens eines spezifizierten Diensts (200) verwendet wird, Bestimmen einer Dienstdeaktivierungskennzahl des spezifizierten Diensts (203), wobei die Dienstdeaktivierungskennzahl die Anzahl an unterbrochenen Online-Rufen pro Zeiteinheit ist;

Ausgeben der bestimmten Dienstdeaktivierungskennzahl an Benutzer; und

jeweils Ausführen einer Unterbrechungsverarbeitung für Online-Rufe des spezifizierten Diensts gemäß einer überarbeiteten Dienstdeaktivierungskennzahl, eingegeben durch die Benutzer basierend auf der ausgegebenen Dienstdeaktivierungskennzahl (206).

12. Verfahren gemäß Anspruch 11, wobei nach dem Schritt des Bestimmens der Dienstdeaktivierungskennzahl des spezifizierten Diensts das Verfahren ferner Folgendes beinhaltet:

Bestimmen der Anzahl der Online-Rufe des spezifizierten Diensts;

Beurteilen, ob die bestimmte Anzahl der Online-Rufe größer als eine voreingestellte Schutzschwelle der Anzahl der Online-Rufe ist, und Implementieren des Schritts des Ausgebens der bestimmten Dienstdeaktivierungskennzahl an die Benutzer; und

wenn beurteilt wird, dass die bestimmte Anzahl der Online-Rufe nicht größer als eine voreingestellte Schutzschwelle der Anzahl der Online-Rufe ist, jeweils Ausführen der Unterbrechungsverarbeitung für die Online-Rufe des spezifizierten Diensts gemäß einem obligatorischen Dienstdeaktivierungsmodus oder einem nicht obligatorischen Dienstdeaktivierungsmodus.

13. Verfahren gemäß Anspruch 11, wobei der Schritt des Bestimmens der Dienstdeaktivierungskennzahl des spezifizierten Diensts Folgendes beinhaltet:

Bestimmen einer Differenz einer maximalen Anzahl an Abrufversuchen pro Sekunde und einer Summe der Anzahl der Abrufversuche pro Sekunde von anderen Diensten neben dem spezifizierten Dienst gemäß der Anzahl der Abrufversuche pro Sekunde, die jeder Dienst, der durch eine Dienststeuerungsknotenvorrichtung verarbeitet wird, jeweils innehat; und

Nehmen eines Produktergebnisses der bestimmten Differenz und eines Gewichts als die bestimmte Dienstdeaktivierungskennzahl des spezifizierten Diensts;

wobei das Gewicht gemäß einer aktuellen CPU-Auslastungsrate einer Dienststeuerungsknotenvorrichtung und einer aktuellen Nachrichtenrückstandsanzahl in einer Nachrichtenwarteschlange bestimmt wird.

**14.** Eine Vorrichtung zur Dienstdeaktivierung, wobei die Vorrichtung Folgendes beinhaltet:

eine Dienstdeaktivierungskennzahlbestimmungseinheit, die zu Folgendem konfiguriert ist: Bestimmen einer Dienstdeaktivierungskennzahl eines spezifizierten Diensts nach dem Empfangen einer Deaktivierungsanweisung, die zum Anfordern des Deaktivierens des spezifizierten Diensts verwendet wird, wobei die Dienstdeaktivierungskennzahl die Anzahl an unterbrochenen Online-Rufen pro Zeiteinheit ist;

eine Mensch-Computer-Interaktion-Einheit, die zu Folgendem konfiguriert ist: Ausgeben der Dienstdeaktivierungskennzahl, bestimmt durch die Dienstdeaktivierungskennzahlbestimmungseinheit, an Benutzer; und eine Dienstdeaktivierungsausführungseinheit, die zu Folgendem konfiguriert ist: jeweils Ausführen einer Unterbrechungsverarbeitung für Online-Rufe des spezifizierten Diensts gemäß einer überarbeiteten Dienstdeaktivierungskennzahl, eingegeben durch die Benutzer basierend auf der durch die Mensch-Computer-Interaktion-Einheit ausgegebenen Dienstdeaktivierungskennzahl.

**15.** Vorrichtung gemäß Anspruch 14, wobei die Dienstdeaktivierungskennzahlbestimmungseinheit Folgendes beinhaltet:

eine Anweisung empfangende Untereinheit, die zu Folgendem konfiguriert ist: Empfangen einer Deaktivierungsanweisung zum Anfordern des Deaktivierens des spezifizierten Diensts;

eine statistische Dienst-Online-Ruf-Untereinheit, die zu Folgendem konfiguriert ist: Bestimmen der Anzahl der Online-Rufe des spezifizierten Diensts, nachdem die Anweisung empfangende Untereinheit die Deaktivierungsanweisung zum Anfordern des Deaktivierens des spezifizierten Diensts empfangen hat;

eine Beurteilungsuntereinheit, die zu Folgendem konfiguriert ist: Beurteilen, ob die Anzahl der durch die statistische Dienst-Online-Ruf-Untereinheit bestimmten Online-Rufe größer als eine voreingestellte Schutzschwelle der Anzahl der Online-Rufe ist; und

eine Dienstdeaktivierungskennzahlbestimmungsuntereinheit, die zu Folgendem konfiguriert ist: Bestimmen der Dienstdeaktivierungskennzahl des spezifizierten Diensts, wenn ein Beurteilungsergebnis der Beurteilungsuntereinheit ja ist, wobei die Dienstdeaktivierungskennzahl die Anzahl an unterbrochenen Online-Rufen pro Zeiteinheit ist.

**16.** Vorrichtung gemäß Anspruch 15, wobei die Dienstdeaktivierungskennzahlbestimmungsuntereinheit Folgendes beinhaltet:

ein erstes Bestimmungsmodul, das zu Folgendem konfiguriert ist: Bestimmen einer Differenz einer maximalen Anzahl an Abrufversuchen pro Sekunde und einer Summe der Anzahl der Abrufversuche pro Sekunde von anderen Diensten neben dem spezifizierten Dienst gemäß der Anzahl der Abrufversuche pro Sekunde, die jeder Dienst, der durch eine Dienststeuerungsknotenvorrichtung verarbeitet wird, jeweils innehat;

ein zweites Bestimmungsmodul, das zu Folgendem konfiguriert ist: Nehmen eines Produktergebnisses der durch das erste Bestimmungsmodul bestimmten Differenz und eines Gewichts als die Dienstdeaktivierungskennzahl des spezifizierten Diensts; wobei das Gewicht gemäß einer aktuellen CPU-Auslastungsrate der Dienststeuerungsknotenvorrichtung und einer aktuellen Nachrichtenrückstandsanzahl in einer Nachrichtenwarteschlange bestimmt wird.

## Revendications

**1.** Un procédé de désactivation de service, le procédé comprenant :

après réception d'une instruction de désactivation utilisée pour demander la désactivation d'un service spécifié (100), déterminer une valeur de taux de désactivation de service du service spécifié (103), ladite valeur de taux de désactivation de service étant le nombre d'appels en ligne interrompus par unité de temps ; et réaliser un traitement d'interruption respectivement pour des appels en ligne du service spécifié selon la valeur de taux de désactivation de service déterminée (106).

**2.** Le procédé selon la revendication 1, le procédé comprenant de surcroît, avant l'étape consistant à déterminer la valeur de taux de désactivation de service du service spécifié :

déterminer le nombre des appels en ligne du service spécifié ; et

évaluer si le nombre déterminé des appels en ligne est supérieur à un seuil de protection préétabli du nombre des appels en ligne.

3. Le procédé selon la revendication 2, le procédé comprenant de surcroît, après l'étape consistant à déterminer le nombre des appels en ligne du service spécifié : lorsqu'il est évalué que le nombre déterminé des appels en ligne n'est pas supérieur au seuil de protection préétabli du nombre des appels en ligne, réaliser le traitement d'interruption respectivement pour les appels en ligne du service spécifié selon un mode de désactivation de service obligatoire ou un mode de désactivation de service non obligatoire.

4. Le procédé selon la revendication 1, dans lequel, l'étape consistant à déterminer la valeur de taux de désactivation de service du service spécifié comprend :

déterminer une différence entre un nombre maximum de tentatives d'appels par seconde et une somme des nombres des tentatives d'appels par seconde d'autres services outre le service spécifié selon le nombre des tentatives d'appels par seconde possédé respectivement par chaque service qui est traité par un dispositif de point de contrôle de service ; et

prendre un résultat produit de la différence déterminée et un poids comme valeur de taux de désactivation de service déterminée du service spécifié.

5. Le procédé selon la revendication 4, dans lequel, ledit poids est déterminé selon un taux d'utilisation d'UC courant du dispositif de point de contrôle de service et un nombre d'arriérés de messages courant dans une queue de messages.

6. Un dispositif de désactivation de service, le dispositif comprenant :

une unité de détermination de valeur de taux de désactivation de service, laquelle est configurée pour : déterminer une valeur de taux de désactivation de service d'un service spécifié après réception d'une instruction de désactivation utilisée pour demander la désactivation du service spécifié, ladite valeur de taux de désactivation de service étant le nombre d'appels en ligne interrompus par unité de temps ; et

une première unité d'exécution de désactivation de service, laquelle est configurée pour : réaliser un traitement d'interruption respectivement pour des appels en ligne du service spécifié selon la valeur de taux de désactivation de service déterminée par l'unité de détermination de valeur de taux de désactivation de service.

7. Le dispositif selon la revendication 6, dans lequel, ladite unité de détermination de valeur de taux de désactivation de service comprend :

une sous-unité de réception d'instruction, laquelle est configurée pour : recevoir une instruction de désactivation pour demander la désactivation du service spécifié ;

une sous-unité statistique d'appels en ligne de service, laquelle est configurée pour :

déterminer le nombre des appels en ligne du service spécifié après réception par la sous-unité de réception d'instruction de l'instruction de désactivation pour demander la désactivation du service spécifié ;

une sous-unité d'évaluation, laquelle est configurée pour : évaluer si le nombre des appels en ligne déterminé par la sous-unité statistique d'appels en ligne de service est supérieur à un seuil de protection préétabli du nombre des appels en ligne ; et

une sous-unité de détermination de valeur de taux de désactivation de service, laquelle est configurée pour : déterminer la valeur de taux de désactivation de service du service spécifié lorsqu'un résultat d'évaluation de la sous-unité d'évaluation est oui, ladite valeur de taux de désactivation de service étant le nombre d'appels en ligne interrompus par unité de temps.

8. Le dispositif selon la revendication 7, dans lequel, ledit dispositif comprend de surcroît une deuxième unité d'exécution de désactivation de service, et ladite deuxième unité d'exécution de désactivation de service est configurée pour : réaliser le traitement d'interruption respectivement pour les appels en ligne du service spécifié selon un mode de désactivation de service obligatoire ou un mode de désactivation de service non obligatoire lorsque le résultat d'évaluation de la sous-unité d'évaluation est non.

9. Le dispositif selon la revendication 7, dans lequel, ladite sous-unité de détermination de valeur de taux de désactivation de service comprend :

un premier module de détermination, lequel est configuré pour : déterminer une différence entre un nombre maximum de tentatives d'appels par seconde et une somme des nombres des tentatives d'appels par seconde d'autres services outre le service spécifié selon le nombre des tentatives d'appels par seconde possédé respectivement par chaque service qui est traité par un dispositif de point de contrôle de service ;

un deuxième module de détermination, lequel est configuré pour : prendre un résultat produit de la différence déterminée par le premier module de détermination et un poids comme valeur de taux de désactivation de service du service spécifié.

10. Le dispositif selon la revendication 9, dans lequel, ledit deuxième module de détermination est configuré pour : déterminer ledit poids selon un taux d'utilisation d'UC courant du dispositif de point de contrôle de service et un nombre d'arriérés de messages courant dans une queue de messages.

11. Un procédé de désactivation de service, le procédé comprenant :

après réception d'une instruction de désactivation utilisée pour demander la désactivation d'un service spécifié (200), déterminer une valeur de taux de désactivation de service du service spécifié (203), ladite valeur de taux de désactivation de service étant le nombre d'appels en ligne interrompus par unité de temps ;

sortir la valeur de taux de désactivation de service déterminée vers des utilisateurs ; et

réaliser un traitement d'interruption respectivement pour des appels en ligne du service spécifié selon une valeur de taux de désactivation de service révisée entrée par les utilisateurs basée sur la valeur de taux de désactivation de service sortie (206).

12. Le procédé selon la revendication 11, le procédé comprenant de surcroît, après l'étape consistant à déterminer la valeur de taux de désactivation de service du service spécifié :

déterminer le nombre des appels en ligne du service spécifié ;

évaluer si le nombre déterminé des appels en ligne est supérieur à un seuil de protection préétabli du nombre des appels en ligne, et mettre en oeuvre l'étape consistant à sortir la valeur de taux de désactivation de service déterminée vers des utilisateurs ; et

lorsqu'il est évalué que le nombre déterminé des appels en ligne n'est pas supérieur au seuil de protection préétabli du nombre des appels en ligne, réaliser le traitement d'interruption respectivement pour les appels en ligne du service spécifié selon un mode de désactivation de service obligatoire ou un mode de désactivation de service non obligatoire.

13. Le procédé selon la revendication 11, dans lequel, l'étape consistant à déterminer la valeur de taux de désactivation de service du service spécifié comprend :

déterminer une différence entre un nombre maximum de tentatives d'appels par seconde et une somme des nombres des tentatives d'appels par seconde d'autres services outre le service spécifié selon le nombre des tentatives d'appels par seconde possédé respectivement par chaque service qui est traité par un dispositif de point de contrôle de service ; et

prendre un résultat produit de la différence déterminée et un poids comme valeur de taux de désactivation de service déterminée du service spécifié ;

dans lequel, ledit poids est déterminé selon un taux d'utilisation d'UC courant d'un dispositif de point de contrôle de service et un nombre d'arriérés de messages courant dans une queue de messages.

14. Un dispositif de désactivation de service, le dispositif comprenant :

une unité de détermination de valeur de taux de désactivation de service, laquelle est configurée pour : déterminer une valeur de taux de désactivation de service d'un service spécifié après réception d'une instruction de désactivation utilisée pour demander la désactivation du service spécifié, ladite valeur de taux de désactivation de service étant le nombre d'appels en ligne interrompus par unité de temps ;

une unité d'interaction humain-ordinateur, laquelle est configurée pour : sortir la valeur de taux de désactivation de service déterminée par l'unité de détermination de valeur de taux de désactivation de service vers des utilisateurs ; et

une unité d'exécution de désactivation de service, laquelle est configurée pour : réaliser un traitement d'interruption respectivement pour des appels en ligne du service spécifié selon une valeur de taux de désactivation de service révisée entrée par les utilisateurs basée sur la valeur de taux de désactivation de service sortie par l'unité d'interaction humain-ordinateur.

15. Le dispositif selon la revendication 14, dans lequel, ladite unité de détermination de valeur de taux de désactivation de service comprend :

une sous-unité de réception d'instruction, laquelle est configurée pour : recevoir une instruction de désactivation demandant la désactivation du service spécifié ;
une sous-unité statistique d'appels en ligne de service, laquelle est configurée pour :

déterminer le nombre des appels en ligne du service spécifié après la réception par la sous-unité de réception d'instruction de l'instruction de désactivation utilisée pour demander la désactivation du service spécifié ;
une sous-unité d'évaluation, laquelle est configurée pour : évaluer si le nombre des appels en ligne déterminé par la sous-unité statistique d'appels en ligne de service est supérieur à un seuil de protection préétabli du nombre des appels en ligne ; et
une sous-unité de détermination de valeur de taux de désactivation de service, laquelle est configurée pour : déterminer la valeur de taux de désactivation de service du service spécifié lorsqu'un résultat d'évaluation de la sous-unité d'évaluation est oui,
ladite valeur de taux de désactivation de service étant le nombre d'appels en ligne interrompus par unité de temps.

16. Le dispositif selon la revendication 15, dans lequel, ladite sous-unité de détermination de valeur de taux de désactivation de service comprend :

un premier module de détermination, lequel est configuré pour ; déterminer une différence entre un nombre maximum de tentatives d'appels par seconde et une somme des nombres des tentatives d'appels par seconde d'autres services outre le service spécifié selon le nombre des tentatives d'appels par seconde possédé respectivement par chaque service qui est traité par un dispositif de point de contrôle de service ;
un deuxième module de détermination, lequel est configuré pour : prendre un résultat produit de la différence déterminée par le premier module de détermination et un poids comme valeur de taux de désactivation de service du service spécifié ;
dans lequel, ledit poids est déterminé selon un taux d'utilisation d'UC courant du dispositif de point de contrôle de service et un nombre d'arriérés de messages courant dans une queue de messages.

FIG.1

FIG.2

The call data area                    The interrupted call data area

FIG.3

┌─────────────────────────────────────────┐ ⌐ 401
│  Service deactivation rate value          │
│  determination unit                       │
│   ┌─────────────────────────────────┐ ⌐ 4011
│   ┊ Instruction receiving subunit    ┊
│   └─────────────────────────────────┘
│            │
│   ┌─────────────────────────────────┐ ⌐4012
│   ┊ Service online call statistical  ┊
│   ┊ subunit                          ┊
│   └─────────────────────────────────┘
│            │
│   ┌─────────────────────────────────┐ ⌐4013
│   ┊ Judging subunit                  ┊
│   └─────────────────────────────────┘
│            │                              ⌐ 403
│   ┌─────────────────────────────────┐ ⌐4014   ┌──────────────┐
│   ┊ Service deactivation rate        ┊         │ Second        │
│   ┊ value determination subunit      ┊         │ deactivation  │
│   └─────────────────────────────────┘         │ execution unit│
└─────────────────────────────────────────┘      └──────────────┘

┌─────────────────────────────────────────┐ ⌐ 402
│  First deactivation execution unit        │
│   ┌─────────────────────────────────┐ ⌐4021
│   ┊ Specified service screening      ┊
│   ┊ subunit                          ┊
│   └─────────────────────────────────┘
│            │
│   ┌─────────────────────────────────┐ ⌐4022
│   ┊ Online call interruption         ┊
│   ┊ subunit                          ┊
│   └─────────────────────────────────┘
│            │
│   ┌─────────────────────────────────┐ ⌐4023
│   ┊ Temporary call bill              ┊
│   ┊ generating subunit               ┊
│   └─────────────────────────────────┘
└─────────────────────────────────────────┘

# FIG.4

Service deactivation rate value
determination unit — 501

Instruction receiving subunit — 5011

Service online call statistical
subunit — 5012

Judging subunit — 5013

Service deactivation rate
value determination subunit — 5014

Second
deactivation
execution unit — 503

Human-computer
interaction unit — 504

First deactivation execution unit — 502

Specified service screening
subunit — 5021

Online call interruption
subunit — 5022

Temporary call bill
generating subunit — 5023

FIG.5

**EP 2 472 941 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 1761273 A